# EUROPÄISCHE PATENTSCHRIFT

(11) **EP 3 309 111 B1**
(45) Veröffentlichungstag und Bekanntmachung des Hinweises auf die Patenterteilung: **26.09.2018**
(21) Anmeldenummer: 17193764.2
(22) Anmeldetag: 28.09.2017
(51) Int. Cl.: B66F 9/075, B60G 17/0165

(54) **FLURFÖRDERZEUG**
INDUSTRIAL TRUCK
CHARIOT DE MANUTENTION

(30) Priorität: 12.10.2016 DE 102016119417
(43) Veröffentlichungstag der Anmeldung: 18.04.2018
(73) Patentinhaber: KION Warehouse Systems GmbH, 72766 Reutlingen (DE)
(72) Erfinder: VOHRER, Matthias, 72762 Reutlingen (DE)
(74) Vertreter: Patentship Patentanwaltsgesellschaft mbH

(56) Entgegenhaltungen:
- WO-A1-2013/121022
- DE-A1- 10 132 355
- US-A1- 2015 274 496

## Beschreibung

Die Erfindung betrifft ein Flurförderzeug, das mit einem Fahrwerk auf einer Fahrbahn abgestützt ist, wobei das Fahrwerk ein lenkbares und mittels eines Fahrantriebs angetriebenes Antriebsrad und zwei nicht-gelenkte Lasträder aufweist, wobei die beiden Lasträdern von dem Antriebsrad in Fahrzeuglängsrichtung beabstandet sind und in Fahrzeugquerrichtung seitlich beabstandet angeordnet sind, wobei mindestens ein Lastrad in vertikaler Richtung verstellbar an einem Fahrzeugkörper des Flurförderzeugs angeordnet ist.

Bekannte gattungsgemäße Flurförderzeuge können ein Drei-Rad-Fahrwerk aufweisen, mit dem das Flurförderzeug auf einer Fahrbahn abgestützt. Ein derartiges Drei-Rad-Fahrwerk besteht aus einem lenkbaren und mittels eines Fahrantriebs angetriebenen Antriebsrad, das in der Regel in Fahrzeugquerrichtung mittig angeordnet ist, und zwei voneinander in Fahrzeugquerrichtung beabstandet angeordneten, nicht-gelenkten Lasträder, die von dem Antriebsrad in Fahrzeuglängsrichtung beabstandet sind und eine Lastradachse bilden. Bekannte gattungsgemäße Flurförderzeuge können alternativ ein Vier-Rad-Fahrwerk aufweisen, mit dem das Flurförderzeug auf einer Fahrbahn abgestützt. Ein derartiges Vier-Rad-Fahrwerk besteht aus einem lenkbaren und mittels eines Fahrantriebs angetriebenen Antriebsrad, das an einer Fahrzeugseite angeordnet ist und einem an der gegenüberliegenden Fahrzeugseite angeordneten Stützrad sowie zwei voneinander in Fahrzeugquerrichtung beabstandet angeordneten, nicht-gelenkten Lasträder, die von dem Antriebsrad und dem Stützrad in Fahrzeuglängsrichtung beabstandet sind und eine Lastradachse bilden.

Bei bekannten Flurförderzeugen sind das Antriebsrad und die Lasträder der Lastradachse mit dem Fahrzeugkörper fest verbunden und in vertikaler Richtung nicht bewegbar am Fahrzeugkörper angeordnet.

Derartige Flurförderzeuge können in einer Regalanlage innerhalb einer Lagerhalle eingesetzt werden. Das Flurförderzeug bewegt sich hierbei im Betrieb längs einer Regalzeile in einem entsprechenden Regalgang der Regalanlage. Verursacht durch Bodenunebenheiten der Fahrbahn kann sich das Flurförderzeug in seitlicher Richtung neigen und in seitlicher Richtung schwingen. Insbesondere bei Flurförderzeugen mit einem Hubgerüst und einem an dem Hubgerüst anhebbaren und absenkbaren Fahrerarbeitsplatz können durch Bodenunebenheiten über den Fahrzeugkörper in das Hubgerüst und den Fahrerarbeitsplatz im Wesentlichen seitlich in Richtung zu dem Regal auftretende Schwingungen eingebracht werden. Diese bei Bodenunebenheiten auftretenden seitlichen Schwingungen sind für einen auf dem Fahrerarbeitsplatz befindlichen Fahrer unerwünscht, insbesondere bei angehobenem Fahrerarbeitsplatz, und können zum Anstoßen des Flurförderzeugs an das Regal führen.

Um während der Fahrt des Flurförderzeugs Bodenunebenheiten der Fahrbahn ausgleichen zu können und durch Bodenunebenheiten verursachte unerwünschte Schwingungen des Flurförderzeugs zu eliminieren, ist es bereits bei gattungsgemäßen Flurförderzeugen bekannt, das Flurförderzeug mit einem aktiven Fahrwerk zu versehen, bei dem ein Lastrad oder beide Lasträder in vertikaler Richtung verstellbar an dem Fahrzeugkörper des Flurförderzeugs angeordnet sind. Zum Ausgleich der Bodenunebenheiten während der Fahrt des Flurförderzeugs ist hierbei eine dynamische Bewegungsmöglichkeit eines Lastrades oder beider Lasträder in vertikaler Richtung vorzusehen. Hierzu ist es bekannt, ein beweglich gelagertes Lastrad mittels eines Antriebs mechanisch in vertikaler Richtung zu verstellen, wenn während einer Fahrt des Flurförderzeugs eine Bodenunebenheit mittels einer am Flurförderzeug angeordneten Sensoreinrichtung erfasst wird. Auf das verstellbare Lastrad wirkt eine durch die Masse des Flurförderzeugs hervorgerufene Radlastkraft. Diese Radlastkraft muss von dem Antrieb bei der vertikalen Verstellung des Lastrades dynamisch überwunden werden.

Ein Flurförderzeug mit in vertikaler Richtung verstellbaren Lasträdern, mit dem seitliche Schwingungen während der Fahrt bei auftretenden Bodenunebenheiten verringert werden können, ist aus der WO 2013/121022 A1 bekannt. Bei der WO 2013/121022 A1 ist das Lastrad für die vertikale Verstellbarkeit in einer verschwenkbaren Schwinge gelagert, die mittels eines Linearaktuator betätigbar ist. Die Schwinge in Verbindung mit dem Linearaktuator weist einen großen Bauraumbedarf und hohen Bauaufwand auf. Sofern bei der WO 2013/121022 A1 beide Lasträder in vertikaler Richtung verstellbar sind, sind entsprechend zwei Linearaktuatoren erforderlich, was den Bauaufwand noch weiter erhöht.

Der vorliegenden Erfindung liegt die Aufgabe zugrunde, ein Flurförderzeug der eingangs genannten Gattung zur Verfügung zu stellen, bei dem das Lastrad bei geringem Bauraumbedarf und mit geringem Bauaufwand in vertikaler Richtung verstellbar ist.

Diese Aufgabe wird erfindungsgemäß dadurch gelöst, dass das in vertikaler Richtung verstellbare Lastrad um eine Raddrehachse drehbar an mindestens einer Exzenterscheibe angeordnet ist, die an dem Fahrzeugkörper um eine Drehachse gelagert ist, wobei die Raddrehachse des Lastrades zu der Drehachse der Exzenterscheibe einen Versatz aufweist. Erfindungsgemäß ist das Lastrad auf einer Exzenterscheibe drehbar gelagert und weist mit der Raddrehachse einen Exzenter-Versatz zu der Drehachse der Exzenterscheibe auf. Durch Drehen der Exzenterscheibe um die Drehachse kann somit aufgrund des Versatzes der Raddrehachse des Lastrades zur Drehachse der Exzenterscheibe eine vertikale Bewegung des Lastrades bei geringem Bauraumbedarf und mit geringem Bauaufwand erzielt werden.

Gemäß einer vorteilhaften Weiterbildung der Erfindung steht die Exzenterscheibe mit einem Drehantrieb in Wirkverbindung. Mit einem entsprechenden Antrieb kann auf einfache Weise die Exzenterscheibe um die Drehachse gedreht werden und somit eine vertikale Bewegung des Lastrades erzielt werden.

Besondere Vorteile ergeben sich, wenn gemäß einer vorteilhaften Ausgestaltungsform der Erfindung ist der Drehantrieb als Elektromotor ausgebildet, der die Exzenterscheibe oder eine mit der Exzenterscheibe in Wirkverbindung stehende und koaxial zur Drehachse der Exzenterscheibe angeordnete Antriebswelle antreibt. Die Drehbewegung des Elektromotors kann hierbei direkt in eine Drehbewegung der Exzenterscheibe oder über die Antriebswelle in eine Drehbewegung der Exzenterscheibe umgesetzt werden. Ein als Elektromotor ausgebildeter Drehantrieb weist gegenüber einem Linearaktuator einen geringeren Bauaufwand auf und ermöglicht es, die vertikale Bewegung des Lastrades genauer und einfacher zu steuern.

Besondere Vorteile ergeben sich, wenn beide Lasträder jeweils mittels mindestens einer Exzenterscheibe in vertikaler Richtung verstellbar am Fahrzeugkörper angeordnet sind, wobei die Exzenterscheiben einen gleichgroßen Versatz der Raddrehachse des Lastrades zu der Drehachse der Exzenterscheibe aufweisen und die Exzenterscheiben derart am Fahrzeugkörper um die Drehachse drehbar gelagert sind, dass der Versatz an dem ersten Lastrad entgegengesetzt angeordnet zu dem Versatz an dem zweiten Lastrad angeordnet ist. Dies ermöglicht es auf einfache Weise, dass beide Lasträder einer Lastradachse des Flurförderzeugs in vertikaler Richtung verstellt werden können.

Hinsichtlich eines geringen Bauaufwandes ergeben sich hierbei Vorteile, wenn gemäß einer Weiterbildung der Erfindung für beide in vertikaler Richtung verstellbare Lasträder ein gemeinsamer Drehantrieb vorgesehen ist. Die beiden Lasträder der Lastradachse können somit mit einem einzigen Drehantrieb gleichzeitig in vertikaler Richtung verstellt werden.

Besondere Vorteile sind erzielbar, wenn gemäß einer Weiterbildung der Erfindung die Exzenterscheiben der beiden Lasträder mit einer Antriebswelle gekoppelt sind. Die Antriebswelle bildet eine Kraftkopplung für die beiden in vertikaler Richtung verstellbaren Lasträder, so dass bei einer Betätigung des Drehantriebs beide Lasträder gleichzeitig verstellt werden. Durch die entgegengesetzt angeordneten Versatze der beiden Lasträder wird hierbei erzielt, dass bei einer Betätigung des Drehantriebs die beiden Lasträder in entgegengesetzte Richtungen verstellt werden. Dies führt zu weiteren Vorteilen, da eine derartige beidseitige vertikale Verstellung von zwei Lasträdern einer Lastradachse, die gleichzeitig in entgegensetzte Richtungen vertikal verstellt werden, zu einer Halbierung des benötigten Verstellweges führt im Vergleich zu einer einseitigen vertikalen Verstellung eines Lastrades einer Lastradachse.

Gemäß einer vorteilhaften Ausgestaltungsform der Erfindung ist das Lastrad auf einer Radwelle um die Raddrehachse drehbar gelagert, wobei die Radwelle an der Exzenterscheibe befestigt ist. Dies ermöglicht es auf einfache Weise, das Lastrad um die Raddrehachse drehbar an der Exzenterscheibe anzuordnen.

Die Radwelle kann hierbei einseitig und somit fliegend an einer Exzenterschiebe angeordnet sein. Vorteile ergeben sich, wenn die Radwelle an zwei Exzenterscheiben befestigt ist, zwischen denen das Lastrad angeordnet ist. Die Radwelle ist somit beidseitig an zwei Exzenterscheiben befestigt, wodurch eine hohe Stabilität bei geringen Abmessungen für die Radwelle erzielt wird.

Gemäß einer vorteilhaften Weiterbildung der Erfindung ist die Exzenterscheibe jeweils mittels einer Lagereinrichtung an dem Fahrzeugkörper drehbar gelagert. Hierdurch können geringe Kräfte und Momente zum Drehen der Exzenterscheiben und somit zum Verstellen des Lastrades bzw. der Lasträder in vertikaler Richtung erzielt werden.

Das Flurförderzeug ist mit einem an einem Hubgerüst anhebbaren und absenkbaren Fahrerstand ausgebildet. Bei einem derartigen Flurförderzeug können mit einer Vertikalverstellung eines Lastrades oder beider Lasträder einer Lastradachse auf einfache Weise seitliche Schwingungen des Flurförderzeugs, die unangenehm für die auf dem Fahrerstand befindliche Bedienperson sind, eliminiert werden.

Gemäß einer vorteilhaften Weiterbildung der Erfindung ist das Flurförderzeug mit einer Sensoreinrichtung versehen, die Bodenunebenheiten der Fahrbahn erfasst, und weist das Flurförderzeug eine elektronische Steuereinrichtung auf, die mit der Sensoreinrichtung eingangsseitig in Verbindung steht und den Drehantrieb ansteuert, wobei die Steuereinrichtung derart ausgebildet ist, dass bei mittels der Sensoreinrichtung erfassten Bodenunebenheiten der Drehantrieb derart angesteuert wird, dass durch eine vertikale Verstellung des mindestens einen Lastrades die erfassten Bodenunebenheiten teilweise oder vollständig ausgeglichen werden. Die vertikale Verstellung eines Lastrades oder beider Lasträder der Lastradachse bildet somit ein aktives Fahrwerk, um Bodenunebenheiten der Fahrbahn zu kompensieren. Mit der erfindungsgemäßen Vertikalverstellung eines Lastrades oder beider Lasträder werden somit Bodenunebenheiten der Fahrbahn kompensiert, so dass seitliche Schwingungen des Flurförderzeugs aufgrund von Bodenunebenheiten verhindert werden. Die Gefahr eines Anstoßens des Hubgerüstes bzw. des Fahrerstandes an ein Regal kann hierdurch verringert. Zudem wird die in dem Fahrerarbeitsplatz befindliche Bedienperson nicht durch unangenehme seitlichen Schwingungen bei der Tätigkeit beeinträchtigt. Durch die Kompensation der Bodenunebenheiten kann das Flurförderzeug zudem mit höheren Fahrgeschwindigkeiten betrieben werden, so dass eine höhere Umschlagsleitung des Flurförderzeugs erzielt werden kann.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer Seitenansicht,
- Figur 2: eine perspektivische Ansicht auf die Lasträder eines erfindungsgemäßen Flurförderzeugs und
- Figur 3: einen Schnitt entlang der Linie A-A der Figur 2.

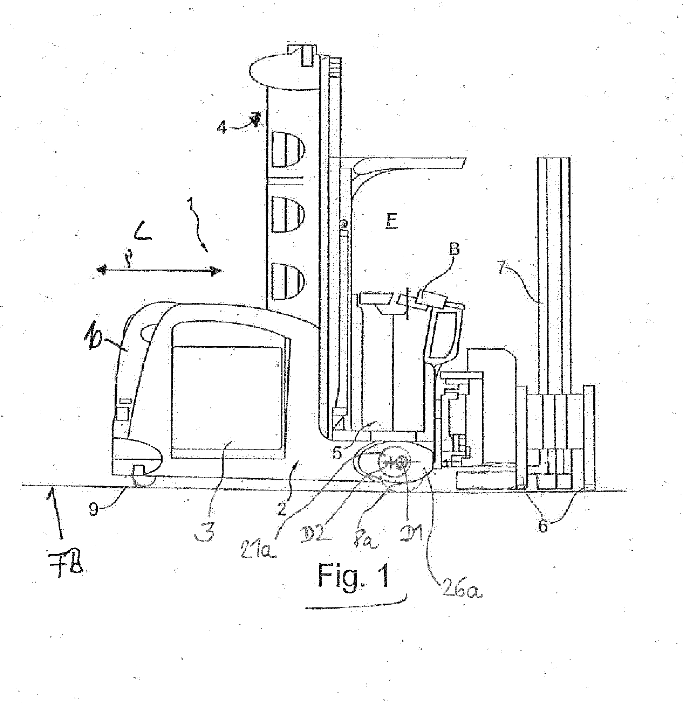

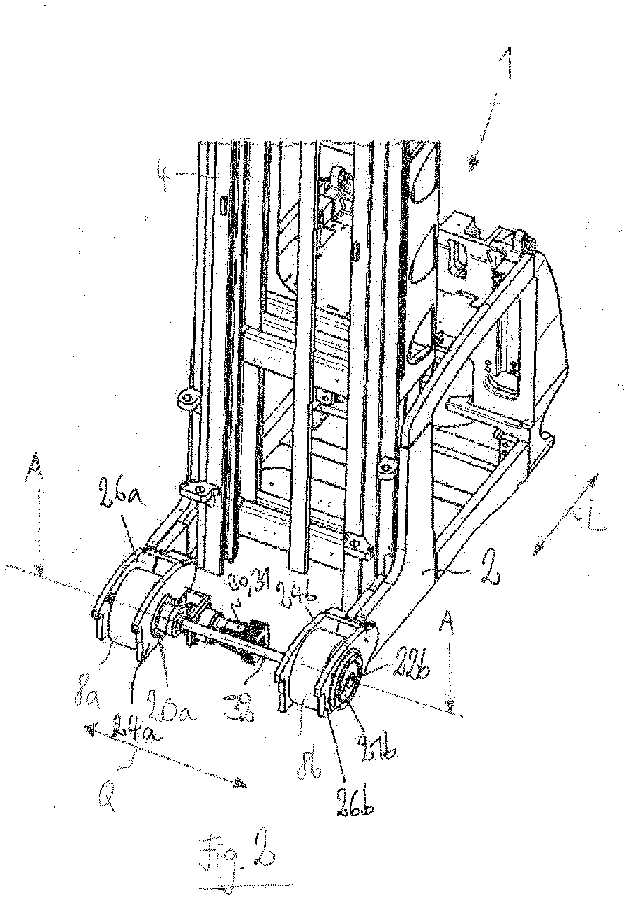

In den Figuren 1 und 2 ist ein erfindungsgemäßes Flurförderzeug 1 dargestellt. Das Flurförderzeug 1 ist im dargestellten Ausführungsbeispiel als Regalstapler bzw. Kommissionierstapler bzw. Vertikalkommissionierer ausgebildet.

Das Flurförderzeug 1 weist einen Fahrzeugkörper 2 mit einem Fahrzeugrahmen auf, in dem ein Batteriefach zur Aufnahme einer Traktionsbatterie 3 eines batterieelektrischen Antriebssystems des Flurförderzeugs 1 ausgebildet ist. Das Flurförderzeug 1 weist ein von einem Hubgerüst 4 gebildetes Hubwerk auf, an dem ein als Fahrkorb bzw. Fahrerkabine ausgebildeter Fahrerstand 5, der einen Fahrerarbeitsplatz F für eine Bedienperson bildet, mittels eines nicht näher dargestellten Hubantriebs auf- und abbewegbar angeordnet ist. An dem anhebbaren und absenkbaren Fahrerstand 5 ist bei dem dargestellten Flurförderzeug 1 ein Lastaufnahmemittel 6 zum Bedienen von seitlich des Flurförderzeugs 1 befindlichen Regalen angeordnet.

Das Lastaufnahmemittel 6 ist im dargestellten Ausführungsbeispiel als Schwenkschubgabel ausgebildet, die an einem am Fahrerstand 5 angeordneten Zusatzhubmast 7 anhebbar und absenkbar angeordnet ist. Alternativ kann das Lastaufnahmemittel von einer in Fahrzeugquerrichtung Q verschiebbar angeordneten Teleskopgabel gebildet werden, die an dem Fahrerstand 5 angeordnet ist. Alternativ kann das Lastaufnahmemittel von einer in Fahrzeuglängsrichtung L angeordneten Lastgabel gebildet sein.

Das Flurförderzeug 1 weist ein Drei-Rad-Fahrwerk auf und stützt sich mittels zwei nicht-gelenkten und nicht angetriebenen Lasträdern 8a, 8b, die an einem lastteilseitigen Ende des Fahrzeugkörpers 2 angeordnet sind und eine Lastradachse bilden, und einem lenkbaren und mittels eines nicht näher dargestellten Fahrantriebs, beispielsweise eines elektrischen Fahrmotors, angetriebenen Antriebsrad 9, das an einem antriebsteilseitigen Ende des Fahrzeugkörpers 2 angeordnet ist, auf einer Fahrbahn FB ab. Die Lasträder 8a, 8b sind somit in Fahrzeuglängsrichtung L von dem Antriebsrad 9 beabstandet. Das Antriebsrad 9 ist bevorzugt in Fahrzeugquerrichtung Q gesehen mittig angeordnet. Die beiden Lasträder 8a, 8b sind jeweils von dem mittig angeordneten Antriebsrad 9 - wie in Verbindung mit der Figur 2 ersichtlich ist - in Fahrzeugquerrichtung Q beabstandet und befinden sich an den entsprechenden Fahrzeugaußenseiten.

Im antriebsteilseitigen Ende des Fahrzeugkörpers 2 ist weiterhin ein nicht näher dargestelltes elektrisches Antriebssystem angeordnet, das den elektrischen Fahrmotor und einen Lenkantrieb, beispielsweise einen elektrischen Lenkmotor, für das lenkbare Antriebsrad 9 sowie ein elektrisch betriebenes Hydraulikpumpenaggregat umfasst, das zur Versorgung der Arbeitshydraulik vorgesehen ist, die von dem Hubantrieb des Hubwerkes 4 sowie einem Hubantrieb des Zusatzhubmastes 7 sowie Antrieben für die im dargestellten Ausführungsbeispiel vorgesehene Schwenkschubgabel als Lastaufnahmemittel 6 gebildet sind.

Das Antriebsteil des Flurförderzeugs 1 befindet sich in Fahrzeuglängsrichtung L vor dem Batteriefach. Das Antriebsteil ist von einer Haube 10 abgedeckt. Das Laststeil des Flurförderzeugs 1 befindet sich in Fahrzeuglängsrichtung L hinter dem Batteriefach und umfasst das Lastaufnahmemittel 6.

In dem Fahrerstand 5 sind die für die Bedienung des Flurförderzeugs 1 erforderlichen Steuer- und Bedienelemente angeordnet, beispielsweise in Form einer als Bedienpult B ausgebildeten Bedieneinrichtung. Das Bedienpult B ist zur Steuerung des Fahrantriebs und der Lasthandhabungsfunktionen des Flurförderzeugs 1 mit entsprechende Bedienelementen sowie einem Lenkbetätigungselement zur Steuerung der Lenkung versehen.

In dem dargestellten Ausführungsbeispiel sind die beiden Lasträder 8a, 8b der Lastradachse jeweils in vertikaler Richtung verstellbar an dem Fahrzeugkörper 2 angeordnet.

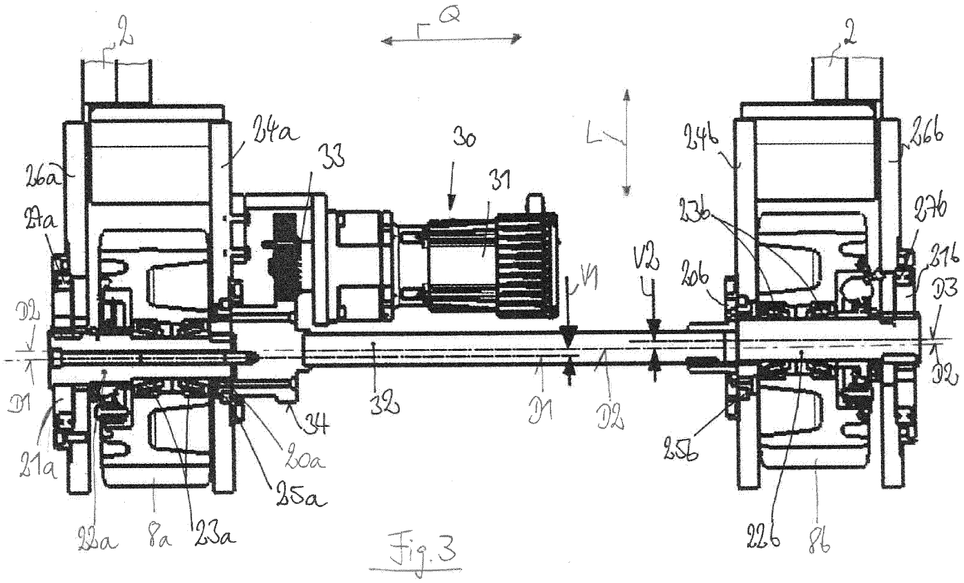

Das Lastrad 8a ist - wie in der Figur 3 näher dargestellt ist - um eine Raddrehachse D1 drehbar an mindestens einer Exzenterscheibe 20a, 21a angeordnet, die an dem Fahrzeugkörper 2 um eine Drehachse D2 gelagert ist. Die Raddrehachse D1 des Lastrades 8a weist zu der Drehachse D2 der Exzenterscheiben 20a, 21a einen Versatz V1 auf.

Im dargestellten Ausführungsbeispiel ist das Lastrad 8a auf einer Radwelle 22a um die Raddrehachse D1 drehbar gelagert. Hierzu kann eine entsprechende Lagereinrichtung 23a vorgesehen sein. Die Radwelle 22a ist an den Exzenterscheiben 20a, 21a befestigt, bevorzugt drehfest befestigt.

Im dargestellten Ausführungsbeispiel ist die Radwelle 22a an zwei Exzenterscheiben 20a, 21a befestigt, zwischen denen das Lastrad 8a angeordnet ist.

Die Exzenterscheibe 20a ist an einer Seitenplatte 24a des Fahrzeugkörpers 2 um die Drehachse D2 drehbar gelagert, bevorzugt mittels einer Lagereinrichtung 25a. Die Exzenterscheibe 21a ist entsprechend an einer Seitenplatte 26a des Fahrzeugkörpers 2 um die Drehachse D2 drehbar gelagert, bevorzugt mittels einer Lagereinrichtung 27a.

Die Seitenplatten 24a, 26a bilden somit ein Radhaus für die Lastrolle 8a.

Die Exzenterscheibe 20a steht zur Drehung um die Drehachse D2 mit einem Drehantrieb 30 in Wirkverbindung steht. Der Drehantrieb 30 ist am Fahrzeugkörper 2 befestigt.

Der Drehantrieb 30 ist im dargestellten Ausführungsbeispiel als Elektromotor 31 ausgebildet, der direkt die Exzenterscheibe 20a oder eine mit der Exzenterscheibe 20a in Wirkverbindung stehende Antriebswelle 32 antreibt, die koaxial zur Drehachse D2 der Exzenterscheibe 20a angeordnet ist. Der Elektromotor 31 kann hierbei beispielsweise mittels eines Ritzels 33 mit einer an der Exzenterscheibe 20a oder der Antriebswelle 32 angeordneten Verzahnung 34 in Eingriff stehen, so dass bei einer Betätigung des Elektromotors 31 die Exzenterscheibe 20a bzw. die Antriebswelle 32 um die Drehachse D2 gedreht wird.

Das Lastrad 8b ist um eine Raddrehachse D3 drehbar an mindestens einer Exzenterscheibe 20b, 21b angeordnet, die an dem Fahrzeugkörper 2 um die Drehachse D2 gelagert ist. Die Raddrehachse D3 des Lastrades 8b weist zu der Drehachse D2 der Exzenterscheiben 20b, 21b einen Versatz V2 auf.

Im dargestellten Ausführungsbeispiel ist das Lastrad 8b auf einer Radwelle 22b um die Raddrehachse D3 drehbar gelagert. Hierzu kann eine entsprechende Lagereinrichtung 23b vorgesehen sein. Die Radwelle 22b ist an den Exzenterscheiben 20b, 21b befestigt, bevorzugt drehfest befestigt.

Im dargestellten Ausführungsbeispiel ist die Radwelle 22b an zwei Exzenterscheiben 20b, 21b befestigt, zwischen denen das Lastrad 8b angeordnet.

Die Exzenterscheibe 20b ist an einer Seitenplatte 24b des Fahrzeugkörpers 2 um die Drehachse D2 drehbar gelagert, bevorzugt mittels einer Lagereinrichtung 25b. Die Exzenterscheibe 21b ist entsprechend an einer Seitenplatte 26b des Fahrzeugkörpers 2 um die Drehachse D2 drehbar gelagert, bevorzugt mittels einer Lagereinrichtung 27b.

Die Seitenplatten 24b, 26b bilden somit ein Radhaus für die Lastrolle 8b.

Die Exzenterscheibe 20b steht zur Drehung um die Drehachse D2 mit dem Drehantrieb 30 in Wirkverbindung steht. Die Exzenterscheibe 20b steht hierzu mit der Antriebswelle 32 in Wirkverbindung. Die Antriebswelle 32 bildet eine Koppelwelle, die die beiden Exzenterscheiben 20a, 20b drehfest miteinander koppelt.

Die Antriebswelle 32 steht somit mit der Exzenterscheibe 20a und der Exzenterscheibe 20b in Wirkverbindung. Die Antriebswelle 32 bildet eine Kraft-Kopplung der beiden Lasträder 8a, 8b, so dass mittels Drehung der Antriebswelle 32 beide Lasträder 8a, 8b gleichzeitig in vertikaler Richtung verstellt werden. Der Drehantrieb 30 bildet somit einen gemeinsamen Drehantrieb für beide Lasträder 8a, 8b, mit dem beide Lasträder 8a, 8b gleichzeitig in vertikaler Richtung verstellt werden können.

Die drehbar an den Seitenplatten 24a, 26a um die Drehachse D2 angeordneten Exzenterscheiben 20a, 21a, an denen die Lastrolle 8a exzentrisch mit dem Versatz V1 angeordnet ist, und die drehbar an den Seitenplatten 24b, 26b um die Drehachse D2 angeordneten Exzenterscheiben 20b, 21b, an denen die Lastrolle 8b mit dem Versatz V2 exzentrisch angeordnet ist, sowie die eine Koppelwelle bildende Antriebswelle 32 sind hierbei koaxial zu der Drehachse D2 angeordnet.

Die Exzenterscheiben 20a, 21a, an denen das Lastrad 8a mit dem Versatz V1 angeordnet und gelagert ist, und die Exzenterscheiben 20b, 21b, an denen das Lastrad 8b mit dem Versatz V2 angeordnet und gelagert ist, weisen einen betragsmäßig gleichgroßen Versatz V1, V2 der Raddrehachse D1 bzw. D3 des Lastrades 8a bzw. 8b zu der Drehachse D2 der Exzenterscheiben 20a, 21a, 20b, 21b auf. Die Exzenterscheiben 20a, 21a, 20b, 21b sind - wie aus der Figur 3 ersichtlich ist - derart am Fahrzeugkörper 2 um die Drehachse D2 drehbar gelagert, dass der Versatz V1 an dem ersten Lastrad 8a entgegengesetzt (entgegengerichtet) angeordnet zu dem Versatz V2 an dem zweiten Lastrad 8b angeordnet ist. Im dargestellten Ausführungsbeispiel ist bezüglich der Drehachse D2 der Versatz V1 in der Figur 3 nach unten (in Fahrzeuglängsrichtung L nach hinten) und der Versatz V2 in der Figur 3 nach oben (in Fahrzeuglängsrichtung L nach vorne) angeordnet.

Bevorzugt sind die Exzenterscheiben 20a, 20b identisch aufgebaut und um 180° Grad verdreht an den beiden gegenüberliegenden Fahrzeugseiten eingebaut, um die entgegengesetzte Versätze V1, V2 zu erzielen. Bevorzugt sind die Exzenterscheiben 21a, 21b identisch aufgebaut und um 180° Grad verdreht an den beiden Fahrzeugseiten eingebaut, um entgegengesetzte Versätze V1, V2 zu erzielen.

Bei einer Betätigung des Drehantriebs 30 wird die Antriebswelle 32 in eine Richtung gedreht, so dass die Exzenterscheiben 20a, 21a, 20b, 21b um die Drehachse D2 in die gleiche Richtung drehen und beide Lasträder 8a, 8b gleichzeitig in vertikaler Richtung verstellt werden. Durch die entgegengesetzt angeordneten Versätze V1, V2 bewegen sich hierbei die beiden Lasträder 8a, 8b in entgegengesetzte und gegenläufige Richtungen, beispielsweise das Lastrad 8a nach unten und das Lastrad 8b nach oben bzw. das Lastrad 8a nach oben und das Lastrad 8b nach unten.

Die erfindungsgemäße Vertikalverstellung der Lasträder 8a, 8b weist einen geringen Bauraumbedarf auf. Der Drehantrieb 30 mit der die beiden Exzenterscheiben 20a, 20b koppelnden Antriebswelle 32 kann bevorzugt unterhalb des vollständig abgesenkten Fahrerstandes 5 zwischen den beiden Lasträdern 8a, 8b angeordnet werden. Zudem ist für die Vertikalverstellung der beiden Lasträder 8a, 8b nur ein Drehantrieb 30 erforderlich, wodurch sich ein geringer Bauaufwand Vertikalverstellung der beiden Lasträder 8a, 8b ergibt.

Das Flurförderzeug 1 ist mit einer nicht näher dargestellten Sensoreinrichtung versehen, die Bodenunebenheiten der Fahrbahn FB erfasst. Eine nicht näher dargestellte elektronische Steuereinrichtung des Flurförderzeugs 1, die mit der Sensoreinrichtung eingangsseitig in Verbindung steht steuert den Drehantrieb 30 derart an, dass bei mittels der Sensoreinrichtung erfassten Bodenunebenheiten der Fahrbahn FB durch eine vertikale Verstellung der Lasträder 8a, 8b die erfassten Bodenunebenheiten teilweise oder vollständig ausgeglichen und somit kompensiert werden.

Die Erfindung ermöglicht es auf einfache Weise, eine mechanische Vertikalverstellung der beiden Lasträder 8a, 8b in gegenläufige Richtungen während der Fahrt des Flurförderzeugs 1 zur Verfügung zu stellen.

Die Kopplung der beiden Lasträder 8a, 8b mittels der Antriebswelle 32 ergibt als Vorteil, dass das von dem Drehantrieb 30 aufzubringende Drehmoment für die vertikale Verstellung der beiden Lasträder 8a, 8b nur die Trägheitsmomente der bewegten Teile, die Reibmomente der Lagereinrichtungen 25a, 27a, 25b, 27b und das Moment aus der Differenz der Radkräfte überwinden muss.

Durch die Kopplung der beiden Lasträder 8a, 8b mittels der Antriebswelle 32 ergibt sich als weiterer Vorteil, dass im Vergleich zu einer einseitigen Verstellung eines Lastrades 8a bzw. 8b eine Halbierung des benötigten Verstellweges erzielt wird.

Mit der erfindungsgemäßen Vertikalverstellung der Lasträder 8a, 8b können Bodenunebenheiten der Fahrbahn FB kompensiert werden, so dass seitliche Schwingungen des Flurförderzeugs 1 aufgrund von Bodenunebenheiten verhindert werden. Die Gefahr eines Anstoßens des Hubgerüstes 4 bzw. des Fahrerstandes 5 an ein Regal wird somit verringert. Zudem wird die in dem Fahrerarbeitsplatz F befindliche Bedienperson nicht durch unangenehme seitlichen Schwingungen bei der Tätigkeit beeinträchtigt. Durch die Kompensation der Bodenunebenheiten kann das Flurförderzeug 1 mit höheren Fahrgeschwindigkeiten betrieben werden, so dass eine höhere Umschlagsleitung des Flurförderzeugs 1 erzielt werden kann.

Die Erfindung ist nicht auf das dargestellte Ausführungsbeispiel beschränkt, bei dem beide Lasträder 8a, 8b in vertikaler Richtung verstellbar sind (beidseitige Vertikalverstellung beider Lasträder 8a, 8b). Es versteht sich, dass die erfindungsgemäße Vertikalverstellung mittels mindestens einer Exzenterscheibe auch nur an einem der beiden Lasträder 8a bzw. 8b vorgesehen sein kann und das gegenüberliegende Lastrad 8b bzw. 8a starr an dem Fahrzeugkörper 2 angeordnet ist (einseitige Vertikalverstellung nur eines Lastrades 8a bzw. 8b).

Anstelle der Befestigung der Lastrollen 8a bzw. 8b jeweils zwischen zwei Exzenterscheiben 20a, 21a bzw. 20b, 21b kann die Lastrolle 8a bzw. 8b nur an einer Exzenterscheibe befestigt sein.

## Patentansprüche

1. Flurförderzeug (1), das mit einem Fahrwerk auf einer Fahrbahn (FB) abgestützt ist, wobei das Fahrwerk ein lenkbares und mittels eines Fahrantriebs angetriebenes Antriebsrad (9) und zwei nicht-gelenkte Lasträder (8a, 8b) aufweist, wobei die beiden Lasträdern (8a, 8b) von dem Antriebsrad (9) in Fahrzeuglängsrichtung (L) beabstandet sind und in Fahrzeugquerrichtung (Q) seitlich beabstandet angeordnet sind, wobei mindestens ein Lastrad (8a; 8b) in vertikaler Richtung verstellbar an einem Fahrzeugkörper (2) des Flurförderzeugs (1) angeordnet ist, **dadurch gekennzeichnet, dass** das in vertikaler Richtung verstellbare Lastrad (8a; 8b) um eine Raddrehachse (D1; D3) drehbar an mindestens einer Exzenterscheibe (20a, 21a; 20b, 21b) angeordnet ist, die an dem Fahrzeugkörper (2) um eine Drehachse (D2) gelagert ist, wobei die Raddrehachse (D1; D3) des Lastrades (8a; 8b) zu der Drehachse (D2) der Exzenterscheibe (20a, 21a; 20b, 21b) einen Versatz (V1; V2) aufweist.

2. Flurförderzeug nach Anspruch 1, **dadurch gekennzeichnet, dass** die Exzenterscheibe (20a, 21a; 20b, 21b) mit einem Drehantrieb (30) in Wirkverbindung steht.

3. Flurförderzeug nach Anspruch 2, **dadurch gekennzeichnet, dass** der Drehantrieb (30) als Elektromotor (31) ausgebildet, der die Exzenterscheibe (20a, 21a; 20b; 21b) oder eine mit der Exzenterscheibe (20a, 21a; 20b, 21b) in Wirkverbindung stehende und koaxial zur Drehachse (D2) der Exzenterscheibe (20a, 21a; 20b, 21b) angeordnete Antriebswelle (32) antreibt.

4. Flurförderzeug nach einem der Ansprüche 1 bis 3, **dadurch gekennzeichnet, dass** beide Lasträder (8a, 8b) jeweils mittels mindestens einer Exzenterscheibe (20a, 21a; 20b, 21b) in vertikaler Richtung verstellbar am Fahrzeugkörper (2) angeordnet sind, wobei die Exzenterscheiben (20a, 21a; 20b 21b) einen gleichgroßen Versatz (V1; V2) der Raddrehachse (D1, D3) des Lastrades (8a, 8b) zu der Drehachse (D2) der Exzenterscheibe (20a, 21a; 20b, 21b) aufweisen und die Exzenterscheiben (20a, 21a; 20b, 21b) derart am Fahrzeugkörper (2) um die Drehachse (D2) drehbar gelagert sind, dass der Versatz (V1) an dem ersten Lastrad (8a) entgegengesetzt angeordnet zu dem Versatz (V2) an dem zweiten Lastrad (8b) angeordnet ist.

5. Flurförderzeug nach Anspruch 4, **dadurch gekennzeichnet, dass** für beide Lasträder (8a, 8b) ein gemeinsamer Drehantrieb (30) vorgesehen ist.

6. Flurförderzeug nach Anspruch 4 oder 5, **dadurch gekennzeichnet, dass** die Exzenterscheiben (20a, 21a; 20b, 21b) der beiden Lasträder (8a, 8b) mit einer Antriebswelle (32) gekoppelt sind.

7. Flurförderzeug nach einem der Ansprüche 1 bis 6, **dadurch gekennzeichnet, dass** das Lastrad (8a; 8b) auf einer Radwelle (22a; 22b) um die Raddrehachse (D1; D3) drehbar gelagert ist, wobei die Radwelle (22a; 22b) an der Exzenterscheibe (20a, 21a; 20b, 21b) befestigt ist.

8. Flurförderzeug nach Anspruch 7, **dadurch gekennzeichnet, dass** die Radwelle (22a; 22b) an zwei Exzenterscheiben (20a, 21a; 20b, 21b) befestigt ist, zwischen denen das Lastrad (8a; 8b) angeordnet ist.

9. Flurförderzeug nach einem der Ansprüche 1 bis 8, **dadurch gekennzeichnet, dass** die Exzenterscheibe (20a, 21a; 20b, 21b) jeweils mittels einer Lagereinrichtung (25a, 27a; 25b, 27b) an dem Fahrzeugkörper (2) drehbar gelagert ist.

10. Flurförderzeug nach einem der Ansprüche 1 bis 9, **dadurch gekennzeichnet, dass** das Flurförderzeug (1) mit einem an einem Hubgerüst (4) anhebbaren und absenkbaren Fahrerstand (5) ausgebildet ist.

11. Flurförderzeug nach einem der Ansprüche 1 bis 10, **dadurch gekennzeichnet, dass** das Flurförderzeug (1) mit einer Sensoreinrichtung versehen ist, die Bodenunebenheiten der Fahrbahn (FB) erfasst, und eine elektronische Steuereinrichtung aufweist, die mit der Sensoreinrichtung eingangsseitig in Verbindung steht und den Drehantrieb (30) ansteuert, wobei die Steuereinrichtung derart ausgebildet ist, dass bei mittels der Sensoreinrichtung erfassten Bodenunebenheiten der Fahrbahn (FB) der Drehantrieb (30) derart angesteuert wird, dass durch eine vertikale Verstellung des mindestens einen Lastrades (8a, 8b) die erfassten Bodenunebenheiten teilweise oder vollständig ausgeglichen werden.

## Claims

1. Industrial truck (1) which is supported with a chassis on a carriageway (FB), wherein the chassis has a steerable drive wheel (9) which is driven by means of a travel drive, and two non-steered load wheels (8a, 8b), wherein the two load wheels (8a, 8b) are spaced apart from the drive wheel (9) in the longitudinal direction (L) of the vehicle and are arranged spaced apart laterally in the transverse direction (Q) of the vehicle, wherein at least one load wheel (8a; 8b) is arranged on a vehicle body (2) of the industrial truck (1) in a manner adjustable in the vertical direction, **characterized in that** the load wheel (8a; 8b) which is adjustable in the vertical direction is arranged rotatably about a wheel axis of rotation (D1; D3) on at least one eccentric disc (20a; 21a; 20b, 21b) which is mounted about an axis of rotation (D2) on the vehicle body (2), wherein the wheel axis of rotation (D1; D3) of the load wheel (8a; 8b) has an offset (V1; V2) with respect to the axis of rotation (D2) of the eccentric disc (20a, 21a; 20b, 21b).

2. Industrial truck according to Claim 1, **characterized in that** the eccentric disk (20a, 21a; 20b, 21b) is operatively connected to a rotary drive (30).

3. Industrial truck according to Claim 2, **characterized in that** the rotary drive (30) is configured as an electric motor (31) which drives the eccentric disc (20a, 21a; 20b, 21b) or a drive shaft (32) which is operatively connected to the eccentric disc (20a, 21a; 20b, 21b) and is arranged coaxially with respect to the axis of rotation (D2) of the eccentric disc (20a, 21a; 20b, 21b).

4. Industrial truck according to one of Claims 1 to 3, **characterized in that** the two load wheels (8a, 8b) are each arranged on the vehicle body (2) by means of at least one eccentric disc (20a, 21a; 20b, 21b) so as to be adjustable in the vertical direction, wherein the eccentric discs (20a, 21a; 20b, 21b) have an identically sized offset (V1; V2) of the wheel axis of rotation (D1, D3) of the load wheel (8a, 8b) with respect to the axis of rotation (D2) of the eccentric disc (20a, 21a; 20b, 21b), and the eccentric discs (20a, 21a; 20b, 21b) are mounted on the vehicle body (2) so as to be rotatable about the axis or rotation (D2) in such a manner that the offset (V1) on the first load wheel (8a) is arranged in an opposed arrangement with respect to the offset (V2) on the second load wheel (8b).

5. Industrial truck according to Claim 4, **characterized in that** a common rotary drive (30) is provided for the two load wheels (8a, 8b).

6. Industrial truck according to Claim 4 or 5, **characterized in that** the eccentric discs (20a, 21a; 20b, 21b) of the two load wheels (8a, 8b) are coupled to a drive shaft (32).

7. Industrial truck according to one of Claims 1 to 6, **characterized in that** the load wheel (8a; 8b) is mounted on a wheel shaft (22a; 22b) so as to be rotatable about the wheel axis of rotation (D1; D3), wherein the wheel shaft (22a; 22b) is fastened to the eccentric disc (20a, 21a; 20b, 21b).

8. Industrial truck according to Claim 7, **characterized in that** the wheel shaft (22a; 22b) is fastened to two eccentric discs (20a, 21a; 20b, 21b) between which the load wheel (8a; 8b) is arranged.

9. Industrial truck according to one of Claims 1 to 8, **characterized in that** the eccentric disc (20a, 21a; 20b, 21b) is in each case mounted rotatably on the vehicle body (2) by means of a bearing device (25a, 27a; 25b, 27b).

10. Industrial truck according to one of Claims 1 to 9, **characterized in that** the industrial truck (1) is configured with a driver's platform (5) which is raisable and lowerable on a lifting frame (4).

11. Industrial truck according to one of Claims 1 to 10, **characterized in that** the industrial truck (1) is provided with a sensor device which detects ground unevenesses of the carriageway (FB), and has an electronic control device which is connected on the input side to the sensor device and activates the rotary drive (30), wherein the control device is configured in such a manner that, when ground unevenesses of the carriageway (FB) are detected by means of the sensor device, the rotary drive (30) is activated in such a manner that the detected ground unevenesses are partially or completly compensated for by a vertical adjustment of the at least one load wheel (8a, 8b).

## Revendications

1. Chariot de manutention (1), qui repose par un train roulant sur une chaussée (FB), dans lequel le train roulant présente une roue motrice (9) orientable et entraînée par un entraînement de roulage et deux roues de charge non articulées (8a, 8b), dans lequel les deux roues de charge (8a, 8b) sont espacées de la roue motrice (9) dans la direction longitudinale (L) du véhicule et sont espacées latéralement dans la direction transversale (Q) du véhicule, dans lequel au moins une roue de charge (8a; 8b) est disposée de façon réglable en direction verticale sur un corps de véhicule (2) du chariot de manutention (1), **caractérisé en ce que** la roue de charge (8a; 8b) réglable en direction verticale est disposée de façon rotative autour d'un axe de rotation de roue (D1; D3) sur au moins un disque excentrique (20a, 21a; 20b, 21b), qui est monté sur le corps de véhicule (2) autour d'un axe de rotation (D2), dans lequel l'axe de rotation de roue (D1; D3) de la roue de charge (8a; 8b) présente un décalage (V1; V2) par rapport à l'axe de rotation (D2) du disque excentrique (20a, 21a; 20b, 21b).

2. Chariot de manutention selon la revendication 1, **caractérisé en ce que** le disque excentrique (20a, 21a; 20b, 21b) est en liaison active avec un entraînement rotatif (30).

3. Chariot de manutention selon la revendication 2, **caractérisé en ce que** l'entraînement rotatif (30) est constitué par un moteur électrique (31), qui entraîne le disque excentrique (20a, 21a; 20b, 21b) ou un arbre d'entraînement (32) se trouvant en liaison active avec le disque excentrique (20a, 21a; 20b, 21b) et disposé de façon coaxiale à l'axe de rotation (D2) du disque excentrique (20a, 21a; 20b, 21b).

4. Chariot de manutention selon l'une quelconque des revendications 1 à 3, **caractérisé en ce que** les deux roues de charge (8a, 8b) sont disposées sur le corps de véhicule (2) de façon réglable en hauteur au moyen d'au moins un disque excentrique (20a, 21a; 20b, 21b), dans lequel les disques excentriques (20a, 21a; 20b, 21b) présentent un décalage identique (V1; V2) de l'axe de rotation de roue (D1, D3) de la roue de charge (8a, 8b) par rapport à l'axe de rotation (D2) du disque excentrique (20a, 21a; 20b, 21b) et les disques excentriques (20a, 21a; 20b, 21b) sont montés sur le corps de véhicule (2) de façon rotative autour de l'axe de rotation (D2), de telle manière que le décalage (V1) à la première roue de charge (8a) soit disposé à l'opposé du décalage (V2) à la deuxième roue de charge (8b).

5. Chariot de manutention selon la revendication 4, **caractérisé en ce qu'**il est prévu un entraînement rotatif commun (30) pour les deux roues de charge (8a, 8b).

6. Chariot de manutention selon la revendication 4 ou 5, **caractérisé en ce que** les disques excentriques (20a, 21a; 20b, 21b) des deux roues de charge (8a, 8b) sont couplés avec un arbre d'entraînement (32).

7. Chariot de manutention selon l'une quelconque des revendications 1 à 6, **caractérisé en ce que** la roue de charge (8a; 8b) est montée sur un arbre de roue (22a; 22b) de façon rotative autour de l'axe de rotation de roue (D1; D3), dans lequel l'arbre de roue (22a; 22b) est fixé au disque excentrique (20a, 21a; 20b, 21b).

8. Chariot de manutention selon la revendication 7, **caractérisé en ce que** l'arbre de roue (22a; 22b) est fixé à deux disques excentriques (20a, 21a; 20b, 21b), entre lesquels la roue de charge (8a; 8b) est disposée.

9. Chariot de manutention selon l'une quelconque des revendications 1 à 8, **caractérisé en ce que** le disque excentrique (20a, 21a; 20b, 21b) est monté de façon rotative sur le corps de véhicule (2) respectivement au moyen d'un dispositif de palier (25a, 27a; 25b, 27b).

10. Chariot de manutention selon l'une quelconque des revendications 1 à 9, **caractérisé en ce que** le chariot de manutention (1) est configuré avec un poste de conducteur (5) pouvant monter et descendre sur un mât de levage (4).

11. Chariot de manutention selon l'une quelconque des revendications 1 à 10, **caractérisé en ce que** le chariot de manutention (1) est muni d'un système de capteurs, qui détecte des inégalités du sol de la chaussée (FB), et présente un dispositif de commande électronique, qui est en liaison à l'entrée avec le système de capteurs et qui commande l'entraînement rotatif (30), dans lequel le dispositif de commande est configuré de telle manière qu'en cas d'inégalités du sol de la chaussée (FB) détectées au moyen du système de capteurs l'entraînement rotatif (30) soit commandé de telle manière que les inégalités du sol détectées soient compensées partiellement ou entièrement par un déplacement vertical de ladite au moins une roue de charge (8a, 8b).
